# EUROPEAN PATENT SPECIFICATION

(11) **EP 3 414 829 B1**
(45) Date of publication and mention of the grant of the patent: **03.06.2020**
(21) Application number: 17703406.3
(22) Date of filing: 03.02.2017
(51) Int. Cl.: H02P 5/74, H02M 1/00

(54) **SYNCHRONISING TRACTION CONVERTERS**
SYNCHRONISATION VON TRAKTIONSWANDLERN
SYNCHRONISATION DE CONVERTISSEURS DE TRACTION

(30) Priority: 08.02.2016 EP 16154719
(43) Date of publication of application: 19.12.2018
(73) Proprietor: ABB Schweiz AG, 5400 Baden (CH)
(72) Inventor: MERMOD, Frederic, 5417 Untersiggenthal (CH); BALDINGER, Marc, 5430 Wettingen (CH); DAEHLER, Peter, 5236 Remigen (CH); WICKI, Stefan, 5702 Niederlenz (CH)
(74) Representative: Qip Patentanwälte Dr. Kuehn & Partner mbB
(86) International application number: PCT/EP2017/052395
(87) International publication number: WO 2017/137324

(56) References cited:
- JP-A- 2008 109 727
- US-A- 5 923 550
- US-A1- 2011 260 656

## Description

### FIELD OF THE INVENTION

The invention relates to the field of traction converters. In particular, the invention relates to a synchronisation system and a method for at least two pulse-width modulated electrical traction converters, a converter system for an electrical train, and a use of an electrical line for synchronising at least two traction converters.

### BACKGROUND OF THE INVENTION

Electrical trains may be supplied via a catenary line with electrical voltage. This power is converted by a system of one or more electrical converters into a voltage supplied to electrical motors driving the train. As a rule, the number of used converters depends on the rated power to be processed.

Due to their switching behaviour, the converters introduce disturbances into the catenary line or more general the supplying grid. However, official standards limit the possible disturbances in both AC and DC grids for traction applications. Usually, it is a demanding task to comply with these limits.

When the converters are pulse-width modulated, a good strategy for achieving low disturbances in the grid is to provide even displacements of the carrier signals of all operating converters. This, however, is only possible if the carrier signals of different converters are synchronised. If some converters and their carrier signals are not synchronised, undesired low frequency disturbances may occur, which are based on clock inaccuracies between differently running clocks of the converters.

One way to avoid these low frequency disturbances may be to synchronise the carrier signals and hence the converter switching to a multiple of the line frequency. However, in this case, for higher frequencies (1kHz ... 2kHz) of the carrier signal, the software task timing may have to be timely decoupled from the converter switching, since the line frequency is not exactly constant. This may create additional complexities and undesired control delays in fast control loops.

It is known to synchronise controllers mounted nearby within the same wagon by fibre optics lines. However, if they are allocated distantly from each other in different wagons, synchronisation via fibres may not be a robust solution anymore, since the fibres may have to be conducted through a number of wagons, which also may be decoupled from each other.

US 2011/0260656 A1 relates to a load drive system for a vehicle, in which a carrier signal from a carrier signal generation circuit, used for controlling a first electrical converter, is sent to a carrier signal inverting circuit, which generates an inverted carrier signal used for controlling a second electrical converter.

US 5 923 550 A relates to interference reduction by a harmonic phase shift in multiple PWM controlled rectifiers, which are part of a system supplying traction motors of cars of a train.

### DESCRIPTION OF THE INVENTION

It is an objective of the invention to simplify the synchronisation between traction converters in a train and to provide a simple and easy to install synchronisation system.

This objective is achieved by the invention as defined by the independent claims. Further exemplary embodiments are evident from the dependent claims and the following description.

A first aspect of the invention relates to a synchronisation system for at least two pulse-width modulated electrical traction converters. A traction converter may be a converter that is used for converting electrical power that is used for driving a train. For example, a traction converter may comprise a rectifier and/or inverter, which may rectify electrical power from a distribution grid and/or which may invert a DC power from a DC link. In the end, the electrical power may be supplied to one or more electrical motors driving the train.

According to an embodiment of the invention, the synchronisation system comprises a first controller adapted for switching a first traction converter with pulse width modulation based on a first carrier signal; a second controller adapted for switching a second traction converter with pulse width modulation based on a second carrier signal; and an electrical line for transmitting a synchronisation signal as electrical signal between the first controller and the second controller; wherein the first controller is adapted for generating the synchronisation signal based on a timing of the first carrier signal; and wherein the second controller is adapted for determining a carrier shift of the second carrier signal with respect to the first carrier signal based on the synchronisation signal.

Both the traction converters may be pulse-width modulated, i.e. may comprise a controller that is adapted for generating a switching signal based on a carrier signal. The carrier signal, which, for example, may be a triangular signal, may be compared with a reference signal (for example a reference voltage) and the switching signal may be generated based on a crossing of the carrier signal with the reference signal.

For generating as less harmonics as possible, the carrier signals of the controllers are synchronised with a synchronisation signal, which is generated by the first controller, transmitted by an electrical line to the second controller and used by the second controller for synchronisation. For example, the synchronisation signal may be a pulsed signal, and the timing of the pulses may determine a timing of the second carrier signal.

The timing of a carrier signal may be defined by a time point of a zero-crossing of the carrier signal. The carrier shift of a carrier signal may be a time interval from a zero-crossing of the carrier signal to another regular signal, such as a clock signal of a controller. For example, the first controller may generate a pulse for the synchronisation signal at a zero-crossing and the second controller may set carrier shift such that the pulse is received at a zero-crossing of the second carrier signal. It may be possible, that the first controller and/or second controller add a time shift to the timing of the synchronisation signal to compensate for signal delay times.

The first controller may be seen as the master controller for synchronisation, the second controller as slave controller. It has to be understood that the system may comprise more than one slave controllers.

It may be seen as a gist of the invention that the synchronisation signal is not transmitted via a fibre optics line, which is usually used for synchronising controllers near converters, since fibre optics lines are not disturbed by electromagnetic fields emitted near electrical converters, but by an electrical line, which may be integrated more easily into a train. For example, it may be easier and more robust to use wires in the train instead of fibre optics.

The controller may be part of the respective converter. For example, the controller may comprise electronics for controlling the respective controller, such as FPGA devices and/or may be integrated into a housing of the respective converter.

According to an embodiment of the invention, the first controller (and the first traction converter) is located in a first wagon of a train and the second controller (and the second traction converter) is located in another or a second wagon of the train. The electrical line may run through the first wagon and the second wagon. In other words, the electrical line may interconnect traction converters in two different wagons. It may be possible that the electrical line runs through, inside or outside further wagons between the first and second wagon.

According to an embodiment of the invention, the electrical line interconnecting the first controller and the second controller comprises at least one decoupleable interconnection provided by a coupling of two wagons of a train. The first and second wagon housing the first and second controllers may be decoupled from each other. In this case, also the electrical line may de decoupled and later easily coupled, for example with corresponding plugs.

It has to be understood that the electrical line may have a length of more than 10 m.

According to an embodiment of the invention, the electrical line comprises two wires and the synchronisation signal is transmitted via the two lines via a differential signal. The signal on the second wire may be the inverse signal of the first wire. In such a way, electromagnetic disturbance may not strongly disturb the synchronisation signal, which may be the difference of the two signals on the two wires.

According to an embodiment of the invention, the electrical line is at least partially shielded or vice versa, partially not shielded. However, it also may be possible to shield the electrical line to protect the signal transmission from electromagnetic disturbances. In particular, the electrical line may be shielded near or inside the housing of a traction converter.

According to an embodiment of the invention, the electrical line is at least partially an external power supply line of a train and/or an internal power supply line of a train. It may not be necessary that an additional electrical line is provided in the train. Already existing electrical lines may be used for transmitting the signal, such as already existing power lines. This line may be an external power supply line, such as a catenary or overhead line, and/or an internal power supply line, such as a battery supply line.

According to an embodiment of the invention, the synchronisation system further comprises a transmitter for receiving the synchronisation signal as optical signal from the first controller and for transforming the synchronisation signal into an electrical signal and a first fibre optics line interconnecting the first controller and the transmitter. For example, the first fibre optics line may run from the first controller outside the housing of the converter (where electromagnetic disturbances are lower). There, the optical synchronisation signal may be transformed into an electrical synchronisation signal and may be introduced into the electrical line (which, for example, may be a power supply line).

According to an embodiment of the invention, the synchronisation system further comprises a receiver for receiving the synchronisation signal as electrical signal and for transforming the synchronisation signal into an optical signal for the second controller and a second fibre optics line interconnecting the second controller and the receiver. For example, the electrical synchronisation signal (which may be taken from a power supply line) may be transformed into an electrical signal outside the housing of a converter and may be transmitted via the second fibre optics line into the housing to the second controller.

According to an embodiment of the invention, the synchronisation system further comprises a third controller adapted for switching a third traction converter with pulse width modulation based on a third carrier signal and a fibre optics line for transmitting the synchronisation signal as optical signal between the first controller and the third controller. It also may be possible that further "slave" controllers also may be synchronised solely via optical synchronisation signals, without an intermediate electrical line.

According to an embodiment of the invention, the first controller and/or a transmitter of the synchronisation signal is adapted to generate the synchronisation signal as rectangular pulse synchronised with a timing of the second carrier signal. The synchronisation signal may have two steep edges, which edges may have a timing corresponding to the timing of the first and/or second carrier signal.

According to an embodiment of the invention, the first controller is adapted for determining an operation status of other traction converters and for adjusting a timing of the synchronisation signal based on the operation status. For example, the first "master" controller may receive a signal from a central controller that one of the other converters has stopped or has started to operate. In this case, the carrier shifts of the carrier signals of the "slaver" controllers (in particular the second carrier signal) may have to be changed to reduce harmonics introduced the distribution grid. I.e. the first controller may change the synchronisation signal based on the operation status of other converters.

For example, the information of the operation status may be distributed via a common field bus (such as CANopen). In case of a converter being out of service, the carrier shifts of the other converters may be automatically adapted in order to get the optimal interference spectrum for each mode of operation.

A further aspect of the invention relates to a converter system for an electrical train, which comprises the synchronisation system as described in the above and in the following, the first traction converter controlled by the first controller and the second traction converter controlled by the second controller. For example, the first and the second traction converters are active rectifiers for converting a voltage supplied to the train into a DC voltage.

A further aspect of the invention relates to a method of synchronising at least two pulse-width modulated electrical traction converters. The method may be performed by the controllers of the traction converters of the synchronisation system.

According to an embodiment of the invention, the method comprises: generating a synchronisation signal in a first controller of a first traction converter, wherein the synchronisation signal is based on a timing of a carrier signal of the first converter used for modulating a switching signal for switching the first converter; transmitting the synchronisation signal as electrical signal via an electrical line to a second controller of a second traction converter; and time-shifting a carrier signal of the second converter based on the synchronisation signal.

A further aspect of the invention relates to a use of an electrical line to transmit a synchronisation signal for carrier signals of pulse-width modulated traction converters in a train. The usage of an electrical line instead of a fibre optics line bridging most of the distance (such as more than 80% of the distance) between the two controllers may simplify the installation of the synchronisation system in one or more wagons of a train.

It has to be understood that features of the converter system, the method and the use as described in the above and in the following may be features of the synchronisation system as described in the above and in the following, and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a train with a converter system according to an embodiment of the invention.
Fig. 2 shows a diagram with signals used in the converter system of Fig. 1.
Fig. 3 schematically shows a synchronisation system according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

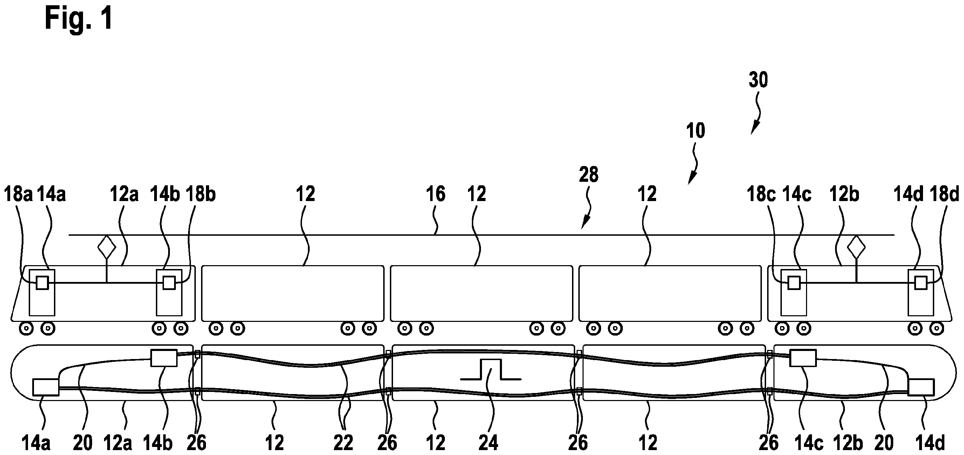

Fig. 1 shows a train 10 from above and from the side, which comprises a plurality of wagons 12. In a first wagon 12a, the train 10 comprises two traction converters 14a, 14b, which are adapted for converting an AC voltage from an overhead line 16 into a DC voltage supplied to a DC link, which furthermore inverted into an AC voltage used to drive electrical motors, which are adapted for rotating wheels of the train 10.

Analogously, the train 10 comprises a last, second wagon 12b, which comprises two further traction converters 14c, 14d, which may be designed analogously like the traction converters 14a, 14b.

Each of the converters 14a to 14d comprises a controller 18a, 18b, 18c, 18d. The controllers 18a to 18d are adapted for switching the converters 14a to 14d with pulse width modulation and for synchronising each other.

The controllers 18a, 18b (or 18c, 18d) within one wagon 12 are adapted to synchronise each other via synchronisation signals sent via a fibre optic line 20. Controllers 18a, 18d (or 18b, 18c) within different wagons 12 are adapted to synchronise each other via synchronisation signals 24 sent via electrical lines 22.

It has to be noted that a first controller 18a in the first wagon 12a may be interconnected with a second controller 18d in the second wagon 12b via a first electrical line 22 and that a third controller 18b in the first wagon 12a may be interconnected with a fourth controller 18c in the second wagon 12b via a second electrical line 22. Furthermore, the first controller 18a and the third controller 18b may be interconnected via first fibre optics line 20 and the second controller 18d and the fourth controller 18c may be interconnected via a second fibre optics line 20. The controllers 18a to 18d and the lines 20, 22 (and optionally 16) may be seen as part of a synchronisation system 28. Together with the converters 14a to 14d, a converter system 30 adapted for synchronisation of remote converters is formed.

The electrical lines 22 may be a dedicated line for synchronisation, may be a power line used for distribution of electrical power inside the wagons (such as a battery net line or an auxiliary power supply line). Also, the overhead line 16 may be used for transmitting synchronisation signals between the controllers 18a to 18d.

The electrical lines 22 may comprise decoupleable interconnections 26 (such as plugs) that may be decoupled, when two wagons 12 are decoupled.

It may be that one of the controllers, such as 18a, with respect to synchronisation is a master controller, while the other controllers, such as 18b to 18d, are slave controllers. The master controller 18a may generate the synchronisation signal 24 and may send it via the lines 20, 22 (and optionally 16) to the slave controllers. For example, the synchronisation signal 24 may be sent via the electrical line 22 to the controller 18d and/or via the fibre optics line 20 to the controller 18b. Furthermore, the synchronisation signal 24 may be sent from the controller 18b via the other electrical line 22 to the controller 18c. Additionally or alternatively, the synchronisation signal 24 may be sent from the controller 18d via the other fibre optics line 20 to the controller 18c.

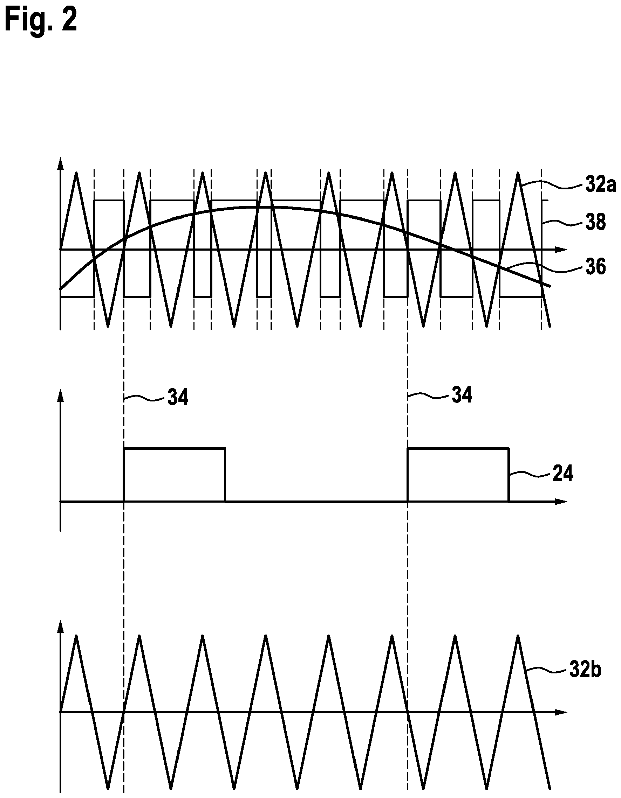

Fig. 2 shows diagrams with signals that are used by the controllers 18a to 18d for controlling and switching the converters 14a to 14d.

For example, the controller 18a generates a carrier signal 32a, which may be a regular zig-zag-signal of a specific periodicity (and/or frequency) having specific regular zero-crossings 34 that are synchronised with an internal clock of the controller 18. The controller 18a receives or generates a reference signal 36 (such as a voltage reference), from which a switching signal 38 is derived based on the carrier signal 32a. For example, whenever the reference signal 36 crosses the carrier signal 32a, the switching signal may change from "+" to "-". In this context, "+" and "-" may be used for switching switches of the converter 14a, for example for connecting a DC link of the converter 14a either in a positive way ("+") to an input or in a negative way ("-").

The other controllers 18b to 18d may control their converters 14b to 14d in an analogous way. For example, as shown in Fig. 2, the controller 18d may control the converter 14d with a further carrier signal 32b (which may have the same form, nearly the same periodicity, nearly the same frequency, etc.).

However, since the controller 18d may have a clock of its own (which may slightly deviate from the clock of the controller 18a) and/or since the carrier signals 32a, 32b are generated (without synchronisation) independently from each other in their controllers 18a, 18d, the carrier signals 32a, 32b may have a phase shift and or slightly deviating frequencies/periodicities.

To synchronise the carrier signals 32a, 32b, the controller 18a may send periodically a synchronisation signal 24 to the controller 18d via the electrical line 22. The synchronisation signal 24 may have a rectangular form and a starting (or alternatively ending) edge of the synchronisation signal 24 may be synchronised with the zero-crossing 34 of the first carrier signal 32a. When receiving the synchronisation signal 24, the second control 18d may synchronise the zero-crossing 34 of its carrier signal 32b with the starting (or alternatively ending) edge of the synchronisation signal 24.

The zero-crossing 34 of the first carrier signal 32a may be seen as the timing of the first carrier signal 32a, the starting (or alternatively ending) edge of the synchronisation signal 24 may be seen as the timing of the synchronisation signal 24 and/or the zero-crossing 34 of the second carrier signal 32b may be seen as the timing of the second carrier signal 32b. In such a way, the first controller 18a may generate a synchronisation signal 24 with a timing based on the timing of the first carrier signal 32a and the second controller 18b may synchronise the timing of the second carrier signal 32b with the timing of the synchronisation signal 24.

It has to be noted that either the first (master) controller 18a or the second (slave) controller 18d may add or subtract a timing offset to the synchronisation signal 24 to compensate for signal running times between the controllers 18a, 18d and/or processing times inside the controllers 18a, 18d.

Furthermore, the first (master) controller 18a may control relative carrier shifts between different converters 14a to 14d, by adding or subtracting a timing offset to the timing of the synchronisation signal 24. For example, the master controller 18a may receive information about the operation status of the other converters 14b to 14d and may be adapted to carrier shifts between different converters 14a to 14d in such a way that harmonics generated in the overhead line 15 are minimized. It may be possible that the master controller 18a adapts the carrier shift of one converter 14b with another timing offset as the one for a further converter 14c.

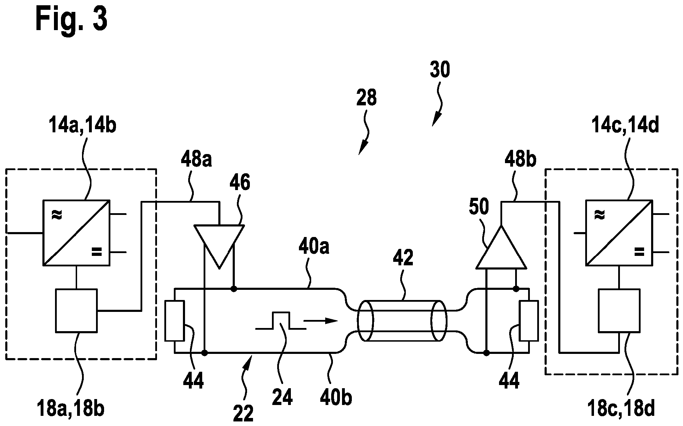

Fig. 3 shows a converter system 30 with a synchronisation system 28, which is based on a two-wire electrical line 22 with two wires 40a, 40b. This makes it possible to transmit the electrical synchronisation signal 24 as differential signal (for example as a first signal on a first wire 40a and a reversed second signal on a second wire 40b).

The two wires 40a, 4b may be terminated with a resistance/impedance 44 to adjust the impedance of the electrical line 22.

However, it also may be possible that the electrical synchronisation signal 24 is sent via only one wire.

Furthermore, the electrical line 22 may be shielded with an electromagnetic shielding 42, at least on the vicinity of sources of strong electromagnetic radiation (such as converter supply lines, etc.). It also may be possible that the electrical line 22 is at least partially not shielded.

The controller 18a (or 18b) may comprise a transmitter 46, which is adapted to modulate the synchronisation signal 24 as electrical signal in the electrical line 22. The transmitter 46 may be interconnected with (other parts of) the controller 18a (or 18b) via a fibre optics line 48a and/or may be adapted to transduce an optical synchronisation signal into an electrical synchronisation signal. For example, the transmitter 46 may be placed outside of an electrical shielding of the converter 14a (or 14b).

On the other hand, the controller 18c (or 18d) may comprise a receiver 50, which is adapted to demodulate the electrical synchronisation signal 24. The receiver 50 may be interconnected with (other parts of) the controller 18c (or 18d) via a fibre optics line 48b and/or may be adapted to transduce an electrical synchronisation signal into an optical synchronisation signal. For example, the transmitter 46 may be placed outside of an electrical shielding of the converter 14c (or 14d).

As an example, the fibre optics lines 48a and/or 48b may be connected to an optical CAN bus interface of the controller 18a, 18b, 18c, 18d and the transmitter 46 and/or receiver 50 may be CAN bus transducers between an optical and an electrical CAN bus.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope. The invention is defined by the appended claims.

### LIST OF REFERENCE SYMBOLS

- 10: train
- 12, 12a, 12b: wagon
- 12a: first wagon
- 12b: second wagon
- 14a, 14b, 14c, 14d: traction converter
- 16: overhead line
- 18a, 18b, 18c, 18d: controllers
- 20: fibre optics line
- 22: electrical line
- 24: synchronisation signal
- 26: interconnection
- 28: synchronisation system
- 30: converter system
- 32a, 32b: carrier signal
- 34: zero-crossing
- 36: reference signal
- 38: switching signal
- 40a, 40b: wire
- 42: shielding
- 44: resistance
- 46: transmitter
- 48a, 48b: fibre optics line
- 50: receiver

## Claims

1. A synchronisation system (28) for at least two pulse-width modulated electrical traction converters (14a, 14d), the system comprising:
a first controller (18a) adapted for switching a first traction converter (14a) with pulse width modulation based on a first carrier signal (32a);
a second controller (18d) adapted for switching a second traction converter (14d) with pulse width modulation based on a second carrier signal (32b);
an electrical line (22) for transmitting a synchronisation signal (24) as electrical signal between the first controller (18a) and the second controller (18d);
wherein the first controller (18a) is adapted for generating the synchronisation signal (24) based on a timing of the first carrier signal (32a);
wherein the second controller (18d) is adapted for determining a carrier shift of the second carrier signal (32b) with respect to the first carrier signal (32a) based on the synchronisation signal (24a);
wherein the first controller (18a) is located in a first wagon (12a) of a train (10) and the second controller (18d) is located in a second wagon (12b) of the train (10);
wherein the electrical line (22) runs through the first wagon (12a) and the second wagon (12b).

2. The synchronisation system (28) of claim 1,
wherein the electrical line (22) interconnecting the first controller (18a) and the second controller (18d) comprises at least one decoupleable interconnection (26) provided by a coupling of two wagons (12) of a train (10).

3. The synchronisation system (28) of one of the preceding claims,
wherein the electrical line (22) comprises two wires (40a, 40b) and the synchronisation signal (24) is transmitted via the two lines (40a, 40b) via a differential signal.

4. The synchronisation system (28) of one of the preceding claims,
wherein the electrical line (22) is at least partially shielded.

5. The synchronisation system (28) of one of the preceding claims,
wherein the electrical line (28) is at least partially an external power supply line (16) of a train (10) and/or an internal power supply line of a train (10).

6. The synchronisation system (28) of one of the preceding claims, further comprising:
a transmitter (46) for receiving the synchronisation signal (24) as optical signal from the first controller (18a) and for transforming the synchronisation signal (24) into an electrical signal; and/or
a first fibre optics line (48a) interconnecting the first controller (18a) and the transmitter (46).

7. The synchronisation system (28) of one of the preceding claims, further comprising:
a receiver (50) for receiving the synchronisation signal (24) as electrical signal and for transforming the synchronisation signal (24) into an optical signal for the second controller (18d); and/or
a second fibre optics line (48b) interconnecting the second controller (18d) and the receiver (50).

8. The synchronisation system (28) of one of the preceding claims, further comprising:
a third controller (18b) adapted for switching a third traction converter (14b) with pulse width modulation based on a third carrier signal;
a fibre optics line (20) for transmitting the synchronisation signal (24) as optical signal between the first controller (18a) and the third controller (18b).

9. The synchronisation system (28) of one of the preceding claims,
wherein the first controller (18a) and/or a transmitter of the synchronisation signal is adapted to generate the synchronisation signal (24) as rectangular pulse synchronised with a timing of the first carrier signal (32a) and/or second carrier signal (32b).

10. The synchronisation system (28) of one of the preceding claims,
wherein the first controller (18a) is adapted for determining an operation status of other traction converters (14b, 14c, 14d) and for adjusting a timing of the synchronisation signal (24) based on the operation status.

11. A converter system (30) for an electrical train, the converter system comprising:
the synchronisation system (28) of one of the preceding claims,
a first traction converter (14a) controlled by the first controller (18a),
a second traction converter (14d) controlled by the second controller (18d).

12. The converter system (30) of claim 11,
wherein the first and the second traction converters (14a to 14d) are active rectifiers for converting a voltage supplied to the train into a DC voltage.

13. A method of synchronising at least two pulse-width modulated electrical traction converters (14a, 14d), the method comprising:
generating a synchronisation signal (24) in a first controller (18a) of a first traction converter (14a), wherein the first controller (18a) is located in a first wagon (12a) of a train (10) and the synchronisation signal (24) is based on a timing of a carrier signal (32a) of the first converter (14a) used for modulating a switching signal (38) for switching the first converter (14a);
transmitting the synchronisation signal (24) as electrical signal via an electrical line (22) to a second controller (18d) of a second traction converter (14d), wherein the second controller (18d) is located in a second wagon (12b) of the train (10) and the electrical line (22) runs through the first wagon (12a) and the second wagon (12b);
time-shifting a carrier signal (32b) of the second converter (14d) based on the synchronisation signal (24).

14. A use of an electrical line (22) to transmit a synchronisation signal (24) for carrier signals (32a, 32b) of pulse-width modulated traction converters (14a, 14d) in a train (10), wherein a first controller (18a), adapted for switching a first traction converter (14a) with pulse width modulation based on a first carrier signal (32a), is located in a first wagon (12a) of the train (10) and a second controller (18d), adapted for switching a second traction converter (14d) with pulse width modulation based on a second carrier signal (32b), is located in a second wagon (12b) of the train (10), wherein the first controller (18a) is adapted for generating the synchronisation signal (24) based on a timing of the first carrier signal (32a) and the second controller (18d) is adapted for determining a carrier shift of the second carrier signal (32b) with respect to the first carrier signal (32a) based on the synchronisation signal (24a); and wherein the electrical line (22) runs through the first wagon (12a) and the second wagon (12b).

## Patentansprüche

1. Synchronisationssystem (28) für mindestens zwei pulsweitenmodulierte elektrische Traktionsumrichter (14a, 14d), wobei das System Folgendes umfasst:
eine erste Steuereinheit (18a), die zum Schalten eines ersten Traktionsumrichters (14a) mit einer Pulsweitenmodulation auf der Grundlage eines ersten Trägersignals (32a) ausgelegt ist;
eine zweite Steuereinheit (18d), die zum Schalten eines zweiten Traktionsumrichters (14d) mit einer Pulsweitenmodulation auf der Grundlage eines zweiten Trägersignals (32b) ausgelegt ist; und
eine elektrische Leitung (22) zum Übertragen eines Synchronisationssignals (24) als elektrisches Signal zwischen der ersten Steuereinheit (18a) und der zweiten Steuereinheit (18d); wobei
die erste Steuereinheit (18a) ausgelegt ist zum Erzeugen des Synchronisationssignals (24) auf der Grundlage eines Zeitablaufs des ersten Trägersignals (32a) ;
die zweite Steuereinheit (18d) ausgelegt ist zum Bestimmen einer Trägerverschiebung des zweiten Trägersignals (32b) in Bezug auf das erste Trägersignal (32a) auf der Grundlage des Synchronisationssignals (24a);
die erste Steuereinheit (18a) sich in einem ersten Wagon (12a) eines Zugs (10) befindet und die zweite Steuereinheit (18d) sich in einem zweiten Wagon (12b) des Zugs (10) befindet und
die elektrische Leitung (22) durch den ersten Wagon (12a) und den zweiten Wagon (12b) verläuft.

2. Synchronisationssystem (28) nach Anspruch 1, wobei
die elektrische Leitung (22), die die erste Steuereinheit (18a) und die zweite Steuereinheit (18d) verbindet, mindestens eine abkoppelbare Verbindung (26) umfasst, die durch ein Koppeln von zwei Wagons (12) eines Zugs (10) bereitgestellt ist.

3. Synchronisationssystem (28) nach einem der vorhergehenden Ansprüche, wobei
die elektrische Leitung (22) zwei Drähte (40a, 40b) umfasst und das Synchronisationssignal (24) über die zwei Leitungen (40a, 40b) mittels eines Differenzsignals übertragen wird.

4. Synchronisationssystem (28) nach einem der vorhergehenden Ansprüche, wobei
die elektrische Leitung (22) mindestens teilweise abgeschirmt ist.

5. Synchronisationssystem (28) nach einem der vorhergehenden Ansprüche, wobei
die elektrische Leitung (28) mindestens teilweise eine externe Stromversorgungsleitung (16) eines Zugs (10) und/oder eine interne Stromversorgungsleitung eines Zugs (10) ist.

6. Synchronisationssystem (28) nach einem der vorhergehenden Ansprüche, das ferner Folgendes umfasst:
einen Sender (46) zum Empfangen des Synchronisationssignals (24) als ein optisches Signal von der ersten Steuereinheit (18a) und zum Umwandeln des Synchronisationssignals (24) in ein elektrisches Signal und/oder
eine erste faseroptische Leitung (48a), die die erste Steuereinheit (18a) und den Sender (46) verbindet.

7. Synchronisationssystem (28) nach einem der vorhergehenden Ansprüche, das ferner Folgendes umfasst:
einen Empfänger (50) zum Empfangen des Synchronisationssignals (24) als elektrisches Signal und zum Umwandeln des Synchronisationssignals (24) in ein optisches Signal für die zweite Steuereinheit (18d) und/oder
eine zweite faseroptische Leitung (48b), die die zweite Steuereinheit (18d) und den Empfänger (50) verbindet.

8. Synchronisationssystem (28) nach einem der vorhergehenden Ansprüche, das ferner Folgendes umfasst:
eine dritte Steuereinheit (18b), die zum Schalten eines dritten Traktionsumrichters (14b) mit einer Pulsweitenmodulation auf der Grundlage eines dritten Trägersignals ausgelegt ist; und
eine faseroptische Leitung (20) zum Übertragen des Synchronisationssignals (24) als optisches Signal zwischen der ersten Steuereinheit (18a) und der dritten Steuereinheit (18b).

9. Synchronisationssystem (28) nach einem der vorhergehenden Ansprüche, wobei
die erste Steuereinheit (18a) und/oder ein Sender des Synchronisationssignals ausgelegt ist, das Synchronisationssignal (24) als einen Rechteckpuls, der mit einem Zeitablauf des ersten Trägersignals (32a) und/oder des zweiten Trägersignals (32b) synchronisiert ist, zu erzeugen.

10. Synchronisationssystem (28) nach einem der vorhergehenden Ansprüche, wobei
die erste Steuereinheit (18a) ausgelegt ist zum Bestimmen eines Betriebszustands weiterer Traktionsumrichter (14b, 14c, 14d) und zum Anpassen eines Zeitablaufs des Synchronisationssignals (24) auf der Grundlage des Betriebszustands.

11. Umrichtersystem (30) für einen Elektrozug, wobei das Umrichtersystem Folgendes umfasst:
das Synchronisationssystem (28) nach einem der vorhergehenden Ansprüche,
einen ersten Traktionsumrichter (14a), der durch die erste Steuereinheit (18a) gesteuert wird, und
einen zweiten Traktionsumrichter (14d), der durch die zweite Steuereinheit (18d) gesteuert wird.

12. Umrichtersystem (30) nach Anspruch 11, wobei
der erste und der zweite Traktionsumrichter (14a bis 14d) aktive Gleichrichter zum Umrichten einer Spannung, die dem Zug zugeführt wird, in eine Gleichspannung sind.

13. Verfahren zum Synchronisieren von mindestens zwei pulsweitenmodulierten elektrischen Traktionsumrichtern (14a, 14d), wobei das Verfahren Folgendes umfasst:
Erzeugen eines Synchronisationssignals (24) in einer ersten Steuereinheit (18a) eines ersten Traktionsumrichters (14a), wobei sich die erste Steuereinheit (18a) in einem ersten Wagon (12a) eines Zugs (10) befindet und das Synchronisationssignal (24) einen Zeitablauf eines Trägersignals (32a) des ersten Umrichters (14a), der zum Modulieren eines Schaltsignals (38) zum Schalten des ersten Umrichters (14a) verwendet wird, als Grundlage verwendet;
Senden des Synchronisationssignals (24) als ein elektrisches Signal über eine elektrische Leitung (22) zu einer zweiten Steuereinheit (18d) eines zweiten Traktionsumrichters (14d), wobei die zweite Steuereinheit (18d) sich in einem zweiten Wagon (12b) des Zugs (10) befindet und die elektrische Leitung (22) durch den ersten Wagon (12a) und den zweiten Wagon (12b) verläuft;
zeitliches Verschieben eines Trägersignals (32b) des zweiten Umrichters (14d) auf der Grundlage des Synchronisationssignals (24).

14. Verwendung einer elektrischen Leitung (22), um ein Synchronisationssignal (24) für Trägersignale (32a, 32b) von pulsweitenmodulierten Traktionsumrichtern (14a, 14d) in einem Zug (10) zu senden, wobei eine erste Steuereinheit (18a), die zum Schalten eines ersten Traktionsumrichters (14a) mit einer Pulsweitenmodulation auf der Grundlage eines ersten Trägersignals (32a) ausgelegt ist, sich in einem ersten Wagon (12a) eines Zugs (10) befindet und eine zweite Steuereinheit (18d), die zum Schalten eines zweiten Traktionsumrichters (14d) mit einer Pulsweitenmodulation auf der Grundlage eines zweiten Trägersignals (32b) ausgelegt ist, sich in einem zweiten Wagon (12b) des Zugs (10) befindet, wobei die erste Steuereinheit (18a) ausgelegt ist zum Erzeugen des Synchronisationssignals (24) auf der Grundlage eines Zeitablaufs des ersten Trägersignals (32a) und die zweite Steuereinheit (18d) ausgelegt ist zum Bestimmen einer Trägerverschiebung des zweiten Trägersignals (32b) in Bezug auf das erste Trägersignal (32a) auf der Grundlage des Synchronisationssignals (24a) und wobei die elektrische Leitung (22) durch den ersten Wagon (12a) und den zweiten Wagon (12b) verläuft.

## Revendications

1. Système de synchronisation (28) pour au moins deux convertisseurs de traction électrique modulés en largeur d'impulsion (14a, 14d), le système comprenant :
une première unité de commande (18a) adaptée à commuter un premier convertisseur de traction (14a) par modulation de largeur d'impulsion sur la base d'un premier signal de porteuse (32a) ;
une deuxième unité de commande (18d) adaptée à commuter un deuxième convertisseur de traction (14d) par modulation de largeur d'impulsion sur la base d'un deuxième signal de porteuse (32b) ;
une ligne électrique (22) destinée à transmettre un signal de synchronisation (24) sous forme de signal électrique entre la première unité de commande (18a) et la deuxième unité de commande (18d) ;
la première unité de commande (18a) étant adaptée à générer le signal de synchronisation (24) sur la base d'un profil temporel du premier signal de porteuse (32a) ;
la deuxième unité de commande (18d) étant adaptée à déterminer un décalage de porteuse du deuxième signal de porteuse (32b) par rapport au premier signal de porteuse (32a) sur la base du signal de synchronisation (24a) ;
la première unité de commande (18a) étant positionnée dans un premier wagon (12a) d'un train (10) et la deuxième unité de commande (18d) étant positionnée dans un deuxième wagon (12b) du train (10) ;
la ligne électrique (22) traversant le premier wagon (12a) et le deuxième wagon (12b).

2. Système de synchronisation (28) selon la revendication 1,
dans lequel la ligne électrique (22) reliant entre elles la première unité de commande (18a) et la deuxième unité de commande (18d) comprend au moins un raccord désaccouplable (26) fourni par un accouplement de deux wagons (12) d'un train (10).

3. Système de synchronisation (28) selon l'une des revendications précédentes,
dans lequel la ligne électrique (22) comprend deux fils (40a, 40b) et le signal de transmission (24) est transmis par le biais des deux lignes (40a, 40b) par le biais d'un signal différentiel.

4. Système de synchronisation (28) selon l'une des revendications précédentes,
dans lequel la ligne électrique (22) est au moins en partie blindée.

5. Système de synchronisation (28) selon l'une des revendications précédentes,
dans lequel la ligne électrique (28) est au moins en partie une ligne d'alimentation électrique externe (16) d'un train (10) et/ou une ligne d'alimentation électrique interne d'un train (10).

6. Système de synchronisation (28) selon l'une des revendications précédentes, comprenant en outre :
un émetteur (46) destiné à recevoir le signal de synchronisation (24) sous forme de signal optique en provenance de la première unité de commande (18a) et destiné à transformer le signal de synchronisation (24) en un signal électrique ; et/ou
une première ligne à fibres optiques (48a) reliant entre eux la première unité de commande (18a) et l'émetteur (46).

7. Système de synchronisation (28) selon l'une des revendications précédentes, comprenant en outre :
un récepteur (50) destiné à recevoir le signal de synchronisation (24) sous forme de signal électrique et destiné à transformer le signal de synchronisation (24) en un signal optique pour la deuxième unité de commande (18d) ; et/ou
une deuxième ligne à fibres optiques (48b) reliant entre eux la deuxième unité de commande (18d) et le récepteur (50).

8. Système de synchronisation (28) selon l'une des revendications précédentes, comprenant en outre :
une troisième unité de commande (18b) adaptée à commuter un troisième convertisseur de traction (14b) par modulation de largeur d'impulsion sur la base d'un troisième signal de porteuse ;
une ligne à fibres optiques (20) destinée à transmettre le signal de synchronisation (24) sous forme de signal optique entre la première unité de commande (18a) et la troisième unité de commande (18b).

9. Système de synchronisation (28) selon l'une des revendications précédentes,
dans lequel la première unité de commande (18a) et/ou un émetteur du signal de synchronisation sont/est adapté(e)/adaptés à générer le signal de synchronisation (24) sous forme d'impulsion rectangulaire synchronisée avec un profil temporel du premier signal de porteuse (32a) et/ou du deuxième signal de porteuse (32b).

10. Système de synchronisation (28) selon l'une des revendications précédentes,
dans lequel la première unité de commande (18a) est adaptée à déterminer un état de fonctionnement d'autres convertisseurs de traction (14b, 14c, 14d) et à ajuster un profil temporel du signal de synchronisation (24) sur la base de l'état de fonctionnement.

11. Système convertisseur (30) pour un train électrique, le système convertisseur comprenant :
le système de synchronisation (28) selon l'une des revendications précédentes,
un premier convertisseur de traction (14a) commandé par la première unité de commande (18a),
un deuxième convertisseur de traction (14d) commandé par la deuxième unité de commande (18d).

12. Système convertisseur (30) selon la revendication 11,
dans lequel les premier et deuxième convertisseurs de traction (14a à 14d) sont des redresseurs actifs destinés à convertir une tension délivrée au train en une tension continue.

13. Procédé de synchronisation d'au moins deux convertisseurs de traction électrique modulés en largeur d'impulsion (14a, 14d), le procédé comprenant :
la génération d'un signal de synchronisation (24) dans une première unité de commande (18a) d'un premier convertisseur de traction (14a), la première unité de commande (18a) étant positionnée dans un premier wagon (12a) d'un train (10) et le signal de synchronisation (24) étant basé sur un profil temporel d'un signal de porteuse (32a) du premier convertisseur (14a) servant à moduler un signal de commutation (38) pour la commutation du premier convertisseur (14a) ;
la transmission du signal de synchronisation (24) sous forme de signal électrique par le biais d'une ligne électrique (22) à une deuxième unité de commande (18d) d'un deuxième convertisseur de traction (14d), la deuxième unité de commande (18d) étant positionnée dans un deuxième wagon (12b) du train (10) et la ligne électrique (22) traversant le premier wagon (12a) et le deuxième wagon (12b) ;
le décalage temporel d'un signal de porteuse (32b) du deuxième convertisseur (14d) sur la base du signal de synchronisation (24).

14. Utilisation d'une ligne électrique (22) pour transmettre un signal de synchronisation (24) pour des signaux de porteuse (32a, 32b) de convertisseurs de traction modulés en largeur d'impulsion (14a, 14d) dans un train (10), une première unité de commande (18a), adaptée à commuter un premier convertisseur de traction (14a) par modulation de largeur d'impulsion sur la base d'un premier signal de porteuse (32a), étant positionnée dans un premier wagon (12a) du train (10) et une deuxième unité de commande (18d), adaptée à commuter un deuxième convertisseur de traction (14d) par modulation de largeur d'impulsion sur la base d'un deuxième signal de porteuse (32b), étant positionnée dans un deuxième wagon (12b) du train (10), la première unité de commande (18a) étant adaptée à générer le signal de synchronisation (24) sur la base d'un profil temporel du premier signal de porteuse (32a) et la deuxième unité de commande (18d) étant adaptée à déterminer un décalage de porteuse du deuxième signal de porteuse (32b) par rapport au premier signal de porteuse (32a) sur la base du signal de synchronisation (24a) ; et la ligne électrique (22) traversant le premier wagon (12a) et le deuxième wagon (12b) .
